# EUROPEAN PATENT APPLICATION

(11) **EP 1 428 853 A1**
(43) Date of publication of application: **16.06.2004**
(21) Application number: 02027393.4
(22) Date of filing: 09.12.2002
(51) Int. Cl.: C08L 23/14, C08L 23/16, C08F 297/08

(54) **Propylene polymer composition with improved balance of mechanical and optical properties**

(71) Applicant: Borealis Technology OY, 06201 Porvoo (FI)
(72) Inventor: Hafner, Norbert Dipl.-Ing. Dr., A-4020 Linz (AT); Töltsch, Wilfried, A-4614 Marchtrenk (AT); Gahleitner, Markus Dipl.-Ing.Dr., A-4501 Neuhofen/Krems (AT); Pitkänen, Päivi, FI-07190 Halkia (FI)
(74) Representative: VA TECH Patente GmbH & Co

(57) **Abstract**

The invention relates to a propylene polymer composition comprising a random propylene-α-olefin copolymer, the α-olefin being ethylene and/or one or more C₄-C₁₀ α-olefins, having a total α-olefin content ≥ 12.0 mol%, preferably ≥ 15.0 mol%, the random propylene-α-olefin copolymer comprising at least two distinct phases where the at least two phases are forming a co-continuous interpenetrating network structure. The invention further relates to a process for preparing the above-mentioned polymer compositions.

## Description

The invention relates to a propylene polymer composition comprising a random propylene copolymer, having an improved balance of mechanical and optical properties, especially very good softness, transparency, and impact strength.
More particularly, the invention relates to a propylene polymer composition comprising a random propylene copolymer, having a total comonomer content ≥ 12.0 mol% and having an improved balance of softness, transparency and low-temperature impact strength. The present invention also relates to a process for the production of such a polymer composition.

Even more particularly, the propylene polymer composition to which the invention relates, comprises a random propylene copolymer, the comonomer being ethylene and/or one or more C₄-C₁₀ α-olefins, having a total comonomer content ≥ 12.0 mol%, preferably ≥ 15.0 mol%, the random propylene copolymer comprising at least two distinct phases.

Soft polypropylenes have been a development target for several years. Optimally, these materials should combine a number of properties, which are difficult to achieve simultaneously, especially a melting point above 100 °C (or, for sterilisation applications, above 120 °C) with good transparency and a certain low-temperature impact strength. The application areas for such materials are wide and are determined by those current polymers which are intended to be replaced, like plasticised poly(vinyl chloride) (s-PVC) styrene elastomers (e.g. styrene-ethylene-butene-styrene block copolymers, SEBS) or thermoplastic poly(urethanes) (TPU). Until today, a satisfactory combination of softness, transparency and low-temperature toughness has not been achieved for purely PO-based materials. Partially, this is due to the limitations imposed by the heterophasic structure necessary for high impact retention down to freezer temperatures (which is a common requirement for e.g. blood pouches for storage). Contradictory to this is the demand for transparency, since even moderate levels of transparency are often achieved only at the sacrifice of high toughness, because the low viscosity, which is necessary for a fine dispersion of the elastomer phase requires a low molecular weight of said phase and thus limits the cohesion of disperse and matrix phase and can even lead to migration effects.

It is therefore the object of the present invention to provide a novel propylene polymer composition, having an improved balance of mechanical and optical properties, especially very good softness, transparency, and impact strength.

Values for the flexural modulus according to DIN 53452/57 of < 300 MPa, better of < 200 MPa are considered as "good softness". Values for haze according to ASTM D-1003-92 (2 mm plaques) of < 60 % are considered as "good transparency". Values for the Charpy notched impact strength according to ISO 179/1eA at +23 °C of > 40 kJ/m², better of > 50 kJ/m² and, still better, when the sample does not break at all, are considered as "high impact strength". Values for the Charpy notched impact strength according to ISO 179/1eA at - 20 °C of > 1.8 kJ/m², better > 2.5 kJ/m² and still better, > 4.5 kJ/m² are considered as "high low-temperature impact strength".

The object of the present invention has been achieved by a propylene polymer composition comprising a random propylene copolymer, the comonomer being ethylene and/or one or more C₄-C₁₀ α-olefins, having a total comonomer content ≥ 12 mol%, preferably ≥ 15 mol%, the random propylene copolymer comprising at least two distinct phases, where the at least two phases are forming a co-continuous interpenetrating network structure, determined with Transmission Electron Microscopy after contrasting with RuO₄.

Such network structures are defined for example by Sperling (in: D. Klempner, L.H. Sperling and L.A. Utracki (Eds.) Interpenetrating Polymer Networks, ACS, Washington DC 1994, pages 3-38). Such systems exhibit a dual phase continuity, where two polymers in the system are continuous on a microscopic scale.
It has been found, that a random propylene copolymer with high comonomer content which comprises at least two phases forming a co-continuous interpenetrating network structure is able to have the desired properties. Due to a partial miscibility of the components in the molten stage the co-continuous morphology is formed parallel to the solidification process by spinodal decomposition. This also allows to combine a partially elastic behaviour in the solid phase with a fully viscous behaviour in the melt phase.
The novel propylene polymer compositions do not have a "classic" heterophasic structure, which is characterised by just one continuous phase with a second embedded distinct discontinuous phase. The novel propylene polymer compositions have a heterophasic structure which is characterised by two continuous phases, which are structured in the nanometer-range. As a consequence of the very fine-structured morphology and the low difference in refractive index between the phases the novel propylene polymer compositions retain their transparency up to very high comonomer contents.
Phase morphologies have been previously identified in the toughened composite resin art as comprising four distinct types. These definitions are also valid for the technical field of the present invention. These types, identified by microscopic techniques, are homogeneous, particulate, phase inverted, and co-continuous. A homogeneous morphology is defined essentially as lacking identifiable structures at a certain magnification. A particulate morphology is defined as specks of a discontinuous phase surrounded by a larger continuous phase (e.g. a "classic" heterophasic copolymer, where the discontinuous phase normally has an additional heterogeneity and is separated into typically two phases of different crystallinity, which are mostly referred to as polyethylene phase and ethylene-propylene-rubber phase). Phase inverted morphology is defined as islands of a discontinuous phase in a smaller continuous phase. The co-continuous morphology is characterised by the presence of at least two phases with microscopic continuity. One or both of the phases may additionally exist in a minor fraction as dispersed particles in the respective other phase. Moreover, one or more additional phases may exist in this form. As those skilled in the art appreciate, phase morphologies are defined at comparable magnifications and comparable microscopic techniques relating both to preparation and image acquisition, and that at some magnifications the above distinctions may be less clear. For the present invention, transmission electron micrographs (TEM) with magnifications of 10.000 to 30.000 acquired after contrasting the specimen with RuO₄ to improve the distinction between phases of different crystallinity were found to be suitable. Other electron microscopy techniques possible are scanning electron microscopy (SEM) on similarly contrasted or plasma etched specimens with analogous magnification. SEM on fracture surfaces or scanning (atomic) force microscopy (AFM) on cut surfaces are less well suited for this purpose.
The random propylene copolymers of the invention have a comonomer content of ≥ 12 mol%, preferably of ≥ 15 mol%, still more preferably of ≥ 18 mol%. Higher comonomer contents are - as a rule of thumb - more preferred for softer products.

According to an embodiment, the random propylene copolymer comprises
(A) 30 - 70 wt% of a first phase containing 2 - 15 mol% comonomer and
(B) 70 - 30 wt% of a second phase containing 20 - 70 mol% comonomer.

In an embodiment of the present invention the upper limit of the overall comonomer content is about 50 mol%, preferably about 45 mol%.

According to a further embodiment, the random propylene copolymer comprises
(A) 40 - 60 wt% of a first phase containing 2 - 12 mol% comonomer and
(B) 60 - 40 wt% of a second phase containing 25 - 65 mol% comonomer.

The first phase A of the inventive propylene copolymers comprises a semicrystalline phase, containing 2 - 15 mol%, preferably 2 - 12 mol% comonomer.
The second phase B of the inventive propylene copolymers comprises an elastomeric phase, containing 20 - 70 mol%, preferably 25 - 65 mol% comonomer.
The propylene copolymer of which the first phase of the inventive random copolymer is comprised may be a binary copolymer or may be comprised of more than two comonomers, e.g. be a terpolymer.
The propylene copolymer of which the second phase of the inventive random copolymer is comprised may also be a binary copolymer or may be comprised of more than two comonomers, e.g. be a terpolymer.
Examples of the comonomers are ethylene, 1-butene, 1-pentene, 4-methyl-1-pentene, 1-hexene, 1-heptene or 1-octene. Preferred are ethene and/or 1-butene.
Examples for the propylene copolymer of the first phase are propylene/ethylene, propylene/butene and propylene/ethylene/butene polymers.
Examples for the propylene copolymer of the second phase are propylene/ethylene and propylene/ethylene/butene polymers.

Particularly preferred as comonomer is ethylene.
According to a preferred embodiment the first as well as the second phase is comprised of a binary copolymer with ethylene as the comonomer.

According to a further embodiment the polymer composition of the present invention exhibits at least one melting point > 130 °C (DSC), the melting point being associated to a melting enthalpy of ≥ 20 J/g.

Since there are at least two distinct phases present, in most cases with different comonomer contents, the polymer compositions usually exhibit at least two different melting points. The melting point > 130 °C usually is associated with the first phase, i.e. with the phase having the lower comonomer content. This melting point is associated to a melting enthalpy of ≥ 20 J/g, preferably ≥ 25 J/g, with higher melting enthalpies indicating higher crystallinities of the phase.
Some embodiments exhibit more than one melting point, for example two melting points. The second melting point, which is associated with the second phase, is usually smaller than that of the first phase and being associated with a melting enthalpy which is smaller than that of the melting point of the first phase, thereby indicating higher comonomer contents and smaller crystallinities of the second phase.

According to a further embodiment, the random propylene copolymer of the propylene polymer composition of the present invention has a total amount of fully randomised comonomer of ≥ 9.0 mol%, preferably of ≥ 10.0 mol%.
In this regard, "fully randomised" means those comonomer units occurring in groups no larger than two consecutive comonomer units. For example, in a linear propylene copolymer the consecutive occurrence of three or more comonomer units would not be considered as "fully randomised" with respect to the comonomer units. Accordingly, the following sequence of ethylene (E) monomer units in a propylene (P) chain would not be considered as "fully randomised" according to the above definition: -P-E-E-E-P-. However, all of the ethylene monomer units of the following sequence would meet the above requirement as to full randomisation: -P-E-P-P-E-E-P-E-P-.

According to a further embodiment the propylene polymer composition of the present invention comprises a blend of at least two random propylene copolymers.
It is in some cases possible to tailor the properties of the propylene polymer composition by compounding two or more random propylene copolymers (each having at least two distinct phases forming a co-continuous interpenetrating network). The result of compounding two of these random copolymers may for example be a propylene polymer composition comprising two distinct phases forming a co-continuous interpenetrating network and a third, discontinuous phase.

According to an embodiment the propylene polymer composition of the present invention therefore comprises at least one further phase, the further phase being discontinuous.

The propylene polymer composition of the present invention may comprise one or more clarifying and/or α-nucleating agents.
Some embodiments of the invention may contain clarifyers and/or α-nucleating agents in order to achieve the desired level of transparency.

There is no specific limitation on the α-nucleating agents employable herein, and various α-nucleating agents conventionally known can be used. Of the various α-nucleating agents, those represented by the following formulae and those explicitly mentioned are considered particularly suitable. 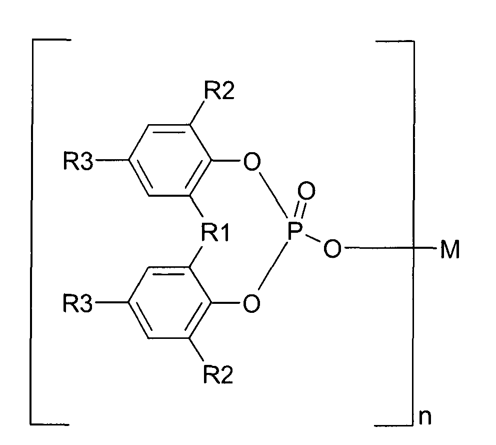 wherein R1 is oxygen, sulphur or a hydrocarbon group of 1 to 10 carbon atoms; each of R2 and R3 is hydrogen or a hydrocarbon group of 1 to 10 carbon atoms; R2 and R3 may be the same or different from each other; two of R2, two of R3, or R2 and R3 may be bonded together to form a ring, M is a monovalent to trivalent metal atom; and n is an integer from 1 to 3.

Specific examples of the α-nucleating agents represented by the above formula include sodium-2,2'-methylene-bis(4,6-di-t-butylphenyl)phosphate, sodium-2,2'-ethylidene-bis(4,6-di-t-butylphenyl)phosphate, lithium-2,2'-methylene-bis(4,6-di-t-butylphenyl)phosphate, lithium-2,2'-ethylidene-bis(4,6-di-t-butylphenyl)phosphate, sodium-2,2'-ethylidene-bis(4-i-propyl-6-t-butylphenyl)phosphate, lithium-2,2'-methylene-bis(4-methyl-6-t-butylphenyl)phosphate, lithium-2,2'-methylene-bis(4-ethyl-6-t-butylphenyl)phosphate, calcium-bis[2,2'-thiobis(4-methyl-6-t-butylphenyl)phosphate], calcium-bis[2,2'-thiobis(4-ethyl-6-t-butylphenyl)phosphate], calcium-bis[2,2'-thiobis-(4,6-di-t-butylphenyl)phosphate], magnesium-bis[2,2'-thiobis-(4,6-di-t-butylphenyl)phosphate], magnesium-bis[2,2'-thiobis-(4-t-octylphenyl)phosphate], sodium-2,2'-butylidene-bis(4,6-dimethylphenyl)phosphate, sodium-2,2'-butylidene-bis(4,6-di-t-butylphenyl)phosphate, sodium-2,2'-t-octylmethylene-bis(4,6-dimethylphenyl)phosphate, sodium-2,2'-t-octylmethylene-bis(4,6-di-t-butylphenyl)phosphate, calcium-bis[2,2'-methylene-bis(4,6-di-t-butylphenyl)phosphate], magnesium-bis[2,2'-methylene-bis(4,6-di-t-butylphenyl)phosphate], barium-bis[2,2'-methylene-bis(4,6-di-t-butylphenyl)phosphate], sodium-2,2'-methylene-bis(4-methyl-6-t-butylphenyl)phosphate, sodium-2,2'-methylene-bis(4-ethyl-6-t-butylphenyl)phosphate, sodium(4,4'-dimethyl-5,6'-di-t-butyl-2,2'-biphenyl)phosphate, calcium-bis[(4,4'-dimethyl-6,6'-di-t-butyl-2,2'-biphenyl)phosphate], sodium-2,2'-ethylidene-bis(4-m-butyl-6-t-butylphenyl)phosphate, sodium-2,2'-methylene-bis(4,6-dimethylphenyl)phosphate, sodium-2,2'-methylene-bis(4,6-diethylphenyl)phosphate, potassium-2,2'-ethylidene-bis(4,6-di-t-butylphenyl)phosphate, calcium-bis[2,2'-ethylidene-bis(4,6-di-t-butylphenyl)phosphate], magnesium-bis[2,2'-ethylidene-bis(4,6-di-t-butylphenyl)phosphate], barium-bis[2,2'-ethylidene-bis(4,6-di-t-butylphenyl)phosphate], aluminium-tris[2,2'-methylene-bis(4,6-di-t-butylphenyl)phosphate] and aluminium-tris[2,2'-ethylidene-bis(4,6-di-t-butylphenyl)phosphate].
Of these, sodium-2,2'-methylene-bis(4,6-di-t-butylphenyl)phosphate is preferred. 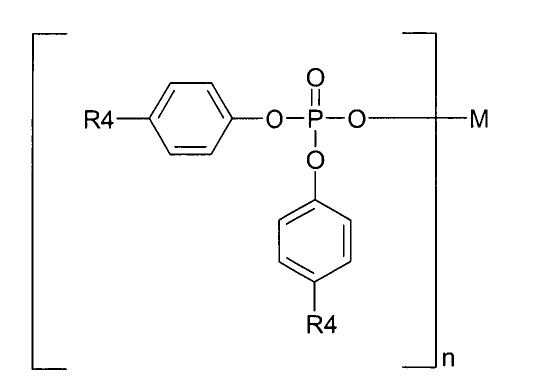 wherein R4 is hydrogen or a hydrocarbon group of 1 to 10 carbon atoms; M is a monovalent to trivalent metal atom; and n is an integer of 1 to 3.

Specific examples of the nucleating agents represented by the above formula include sodium-bis(4-t-butylphenyl)phosphate, sodium-bis(4-methylphenyl)phosphate, sodium-bis(4-ethylphenyl)phosphate, sodium-bis(4-i-propylphenyl) phosphate, sodium-bis(4-t-octylphenyl)phosphate, potassium-bis(4-t-butylphenyl)phosphate, calcium-bis(4-t-butylpheyl) phosphate, magnesium-bis(4-t-butylpheyl)phosphate, lithium-bis(4-t-butylpheyl)phosphate and aluminium-bis(4-t-butylpheyl)phosphate.
Of these, sodium-bis(4-t-butylphenyl)phosphate is preferred. 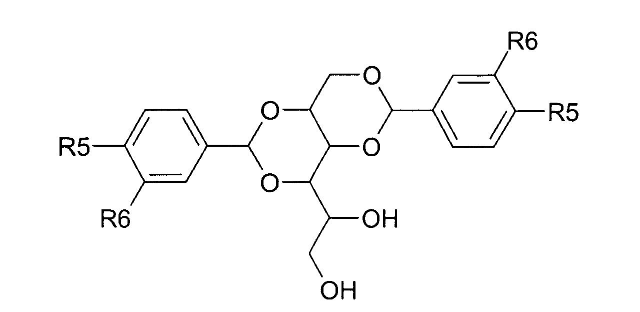 wherein each of R5 and R6 is hydrogen or a hydrocarbon group of 1 to 10 carbon atoms; R5 and R6 may be the same or different from each other.
Specific examples of the nucleating agents represented by the above formula include 1,3,2,4-dibenzylidenesorbitol, 1,3-benzylidene-2,4-p-methylbenzylidenesorbitol, 1,3-benzylidene-2,4-p-ethylbenzylidenesorbitol, 1,3-p-methylbenzylidene-2,4-benzylidenesorbitol, 1,3-p-ethylbenzylidene-2,4-benzylidenesorbitol, 1,3-p-methylbenzylidene-2,4-p-ethylbenzylidenesorbitol, 1,3-p-ethylbenzylidene-2,4-p-methylbenzylidenesorbitol, 1,3,2,4-di(p-methylbenzylidene)sorbitol, 1,3,2,4-di(p-ethylbenzylidene)sorbitol, 1,3,2,4-di(p-n-propylbenzylidene)sorbitol, 1,3,2,4-di(p-i-propylbenzylidene)sorbitol, 1,3,2,4-di(p-n-butylbenzylidene)sorbitol, 1,3,2,4-di(p-s-butylbenzylidene)sorbitol, 1,3,2,4-di(p-t-butylbenzylidene)sorbitol, 1,3,2,4-di(2',4'-dimethylbenzylidene)sorbitol, 1 ,3,2,4-di(3',4'-dimethylbenzylidene)sorbitol, 1,3,2,4-di(p-methoxybenzylidene)sorbitol, 1,3,2,4-di(p-ethoxybenzylidene)sorbitol, 1,3-benzylidene-2,4-p-chlorobenzylidenesorbitol, 1,3-p-chlorobenzylidene-2,4-benzylidenesorbitol, 1,3-p-chlorobenzylidene-2,4-p-methylbenzylidenesorbitol, 1,3-p-chlorobenzylidene-2,4-p-ethylbenzylidenesorbitol, 1,3-p-methylbenzylidene-2,4-p-chlorobenzylidenesorbitol, 1,3-p-ethylbenzylidene-2,4-p-chlorobenzylidenesorbitol and 1,3,2,4-di(p-chlorobenzylidene)sorbitol. Mixtures of two or more of these nucleating agents are also employable.

Of these, 1,3,2,4-dibenzylidenesorbitol, 1,3,2,4-di(p-methylbenzylidene)sorbitol, 1,3,2,4-di(p-ethylbenzylidene)sorbitol, 1,3-p-chlorobenzylidene-2,4-p-methylbenzylidenesorbitol, 1,3,2,4-di(p-chlorobenzylidene)sorbitol and 1,3,2,4-di(3',4'-dimethylbenzylidene)sorbitol are preferred.
Also employable are other nucleating agents such as metallic salts of aromatic carboxylic acids and metallic salts of aliphatic carboxylic acids. Specific examples thereof include sodium benzoate, aluminium benzoate, aluminium p-t-butylbenzoate, sodium adipate, sodium thiophenecarboxylate and sodium pyrrolecarboxylate.

Any one or mixtures of two or more of the above mentioned α-nucleating agents may also be used.
Of the above-mentioned α-nucleating agents 1,3,2,4-di(3',4'-dimethylbenzylidene)sorbitol is particularly preferred.
A still further α-nucleating agent, which is also among those which are particularly preferred and which has not been mentioned above, is commercially available from Asahi Denka Kogyo (Japan) under the name "ADK STAB NA21E".

In the propylene copolymer of the invention, the α-nucleating agent is used in an amount of 0.001 to 10 wt%, preferably 0.01 to 5 wt%, more preferably 0.01 to 1 wt%.

By using one or more of the above-mentioned α-nucleating agents in the aforementioned amounts it is possible to obtain propylene polymer compositions having very good transparency while still maintaining the improved balance of softness, transparency and low-temperature impact strength. A further advantage of the application of such nucleating agents is the possibility to increase the processing speed, for example by reducing the cycle time in an injection moulding process.

It is a further object of the invention to provide a process for preparing the propylene polymer compositions of the invention.
This object is achieved by a process comprising polymerisation of propylene with a comonomer, the comonomer being ethylene and/or one or more C₄-C₁₀ α-olefins, in the presence of a catalyst in a gas polymerisation process, where the amounts of propylene and comonomer being fed to the gas polymerisation process are chosen in order to adjust a comonomer-content of the random propylene copolymer of ≥ 12 mol%, preferably of ≥ 15 mol%, still more preferably of ≥ 18 mol% and where the catalyst is selected from the class of Ziegler-Natta-type catalysts and where the temperature in the gas polymerisation process is > 75 °C and the pressure in the gas polymerisation process is > 2.0 MPa.

A high isotacticity Ziegler-Natta type catalyst with a strong internal donor (e.g. di-alkyl-phthalate based) and an average particle size of 25 to 90 µm (e.g. Borealis BHC01P) has to be used to allow sufficient crystallinity in the more crystalline part of the polymer. In a discontinuous process, a seeding bed material consisting essentially of polypropylene has to be used in a quantity of 5 - 35 wt% of the final polymer quantity, and a constant comonomer stream has to be used to optimise the random incorporation. In a continuous process, the seeding bed material is normally already present and the constant comonomer feed normally given as well. If the polymerisation is performed in a series of sequential gas phase reactors, the same comonomer feed ratio must be used, while different temperature and pressure settings can be used.
The process for preparing the random propylene polymers is in its basic embodiment a single step process, comprising a single gas polymerisation step.

According to a further embodiment, however, the gas phase polymerisation is preceded by a bulk phase polymerisation.
The result of the bulk phase polymerisation preceding the gas phase polymerisation may be a homopolymer. Since however the product of the subsequent gas phase polymerisation as described above is a polymer having at least two distinct phases forming a co-continuous interpenetrating network, this product is considered to be a random propylene copolymer for the purpose of the present invention.

Preferably this bulk phase polymerisation is operated at a temperature of ≤ 75 °C and the preferred comonomer for polymerising the random propylene copolymers of the invention is ethylene.

According to a further embodiment, the invention also encompasses an article comprising a propylene polymer composition according to the invention as described herein before.

Such articles preferably are films, especially cast film and oriented films, e.g. BOPP films, injection moulded thin-walled parts, blow moulded hollow bodies and injection stretch blow moulded hollow bodies.

### Examples

### General Procedure

The concerned polymers have been produced via 1-step gas phase polymerisation or 2-step bulk/gas phase polymerisation in a 20 litre autoclave with special geometry and equipped with double helical stirring device.

The monomers used were polymerisation grade and were additionally purified via BASF catalyst R3-11 (Cu), GIRDLER catalyst (CuO/ZnO) and molecular sieves 4 and 10 Å. The hydrogen which was used as terminating agent was 6.0 grade. Catalyst complex used is BHC01P (Borealis; solid, high isotacticity Ziegler/Natta type catalyst supported on magnesium dichloride with a di-alkyl-phthalate internal donor and an average particle size in the range of from 40 to 80 µm in combination with Triethylaluminium (TEAL; Aldrich) as cocatalyst (used as 1-molar hexane solution), and donor Dicyclopentyldimethoxysilane (Wacker) used as 0.3-molar hexane solution.

1-step gas phase polymerisation is started by dosing the catalyst complex (mixing TEAL and donor for 5 min and reacting this solution with solid catalyst component for an additional 5 min) with liquid propylene to the reactor filled with 250 g pelletised polypropylene (from earlier runs without stabilisers, but adjusted with high density filler for easier separation of reactor product by flotation; pellets purified by vacuuming and nitrogen spilling at 135 °C; enables satisfying bed conditions in the early stage of gas phase polymerisation), ∼600 g liquid propylene, adequate amount of H₂ for achieving the aspired MFR and ethylene flow of 0.3 nl/min. After a short prepolymerisation period temperature, pressure and ethylene flow were adjusted to gas phase conditions necessary for achieving the intended ethylene content and MFR in the products. Pressure was held by continuous addition of preheated gaseous propylene, whereas ethylene was dosed at constant flow rate. After specified residence time the polymerisation was stopped by flashing the monomers and cooling.
In case of 2-step (bulk/gas phase) polymerisation the catalyst complex (preparation as above) is spilled with liquid propylene into the reactor filled with about 600 g propylene, adequate amount of H2 for achieving aspired MFR and ethylene flow of 0.3nl/min. After a short period of prepolymerisation the temperature controller is set to temperature of bulk polymerisation and constant ethylene flow is adjusted to achieve aspired ethylene concentration in bulk product. After predefined residence time in bulk polymerisation temperature control is set to gas phase polymerisation temperature and monomers are flashed down to ∼1.5 MPa total pressure to achieve gas phase conditions controlling in parallel ethylene flow. After dosing in additional H₂ for achieving the target MFR, ethylene flow is adjusted to reach target ethylene content in gas phase part of product. After predetermined residence time to adjust mass ratio of bulk and gas phase part of product, polymerisation is stopped by flashing and cooling.
Reactor products are pelletised via TSE16 extruder (PRISM) and additivated with 0.2 % Irganox B225, 0.1 % Ca-stearate and 0.06 % glycerine monostearate. All samples have been nucleated with 1,3,2,4-di(3',4'-dimethylbenzylidene)sorbitol.

### Example 1

Prepolymerisation was performed in 20 l reactor filled with 250 g pelletised polypropylene, 850 g liquid propylene, 24 nl H2 and ∼0.35 nl/min ethylene flow at 23 °C.
After 7 minutes temperature control is set to 95 °C. When the temperature reaches 50 °C the constant ethylene flow is increased to 4.5 nl/min and propylene dosing in parallel is set to arrive and hold 3.9 MPa at 95 °C. After 60 min residence time polymerisation resulted in 1683 g of polymer. Catalyst activity was 54.8 kg/g_{cat}·h.

The reactor product was separated from the bed polymer by flotation, additivated as described above and pelletised. Characterisation resulted in 19.0 mol% ethylene content, MFR = 3.4 g/10min (230 °C, 2.16 kg) and xylene solubles of 74.7 wt%. The content of isolated (i.e. fully randomised) ethylene is 13.1 mol%. Glass transition temperature T_{g} is -21.4 °C. Flexural modulus according to ISO 178 is 73.2 MPa and notched impact strength according to ISO179/1eA at -20 °C is 88.7 kJ/m². Haze of 2 mm plates is 31.7 %. TEM photographs of the polymer sample treated with RuO₄ for marking zones of different crystallinity with a magnification of 21000 show two different continuous phases structured in the nanometer-range having different crystallinity. This is quite different to standard random copolymers with ethylene contents < 12 mol%, which do not show two continuous phases, but only one continuous phase at lower ethylene contents or one continuous phase with a second embedded distinct discontinuous phase consisting of EPR at higher ethylene contents.

### Example 2

Two separate gas phase polymerisation products were mixed, additivated as described above and compounded using a weight ratio of 1:1.
Gas phase products were prepared according to example 1, but at a polymerisation temperature of 75 °C and at a different ethylene dosing/total pressure.

### Example 2a

For the first gas phase polymerisation an ethylene flow of 4.5 nl/min has been used and propylene dosing in parallel was set to arrive and hold 2.9 MPa. After 59 min residence time polymerisation resulted in 3494 g of polymer. Catalyst activity was 44.5 kg/g_{cat}·h.
Characterisation resulted in 13.0 mol% ethylene content, MFR = 6.9 g/10 min (230 °C, 2.16 kg) and xylene solubles of 40.1 wt%. The content of isolated (i.e. fully randomised) ethylene is 9.4 mol%. Glass transition temperature T_{g} is -9.0 °C. Flexural modulus according to ISO 178 is 273 MPa, notched impact strength according to ISO 179/1eA (-20 °C) is 1.9 kJ/m² and tensile test showed elongation at break (-20 °C) of 168 %. Haze of 2 mm plates is 17.9 %. TEM photographs of the nucleated polymer sample treated with RuO₄ for marking zones of different crystallinity with a magnification of 21000 show two different continuous phases structured in the nanometer-range with different crystallinity (white crystalline lamellae and a grey zone of lower crystallinity) and a low concentration of finely dispersed rubber phase (dark grey to black droplets). The two continuous zones correlate with two melting points of DSC curve at 141 °C and 104 °C.

### Example 2b

For the second gas phase polymerisation an ethylene flow of 4.7 nl/min has been used and propylene dosing in parallel was set to arrive and hold 2.4 MPa. After 60 min residence time polymerisation resulted in 2341 g of polymer. Catalyst activity was 48.2 kg/g_{cat}·h.
Characterisation resulted in 18.0 mol% ethylene content, MFR = 6.5 g/10 min (230 °C, 2.16 kg) and xylene solubles of 70.5 wt%. The content of isolated (fully randomised) ethylene is 12.2 mol%. Glass transition temperature is -17 °C. Flexural modulus according to ISO 178 is 69 MPa, notched impact strength according to ISO 179/1eA (-20 °C) is 71.9 kJ/m² and tensile test showed elongation at break (-20 °C) of 245 %. Haze of 2 mm plates is 27.8 %. TEM photographs of the nucleated polymer sample treated with RuO₄ for marking zones of different crystallinity with a magnification of 21000 show two different continuous phases structured in the nanometer-range with different crystallinity (white crystalline lamellae and a grey zone of lower crystallinity) and a higher concentration of coarsely dispersed rubber phase (dark grey to black droplets). The two continuous zones correlate with two melting points of DSC-curve at 142 °C and 87 °C.
Gas phase polymerisation products 2a and 2b were mixed and pelletised using Altrix 3021 for visbreaking. Altrix 3021 is a masterbatch of 5 wt% di-t-butyl-peroxide produced by adsorption on polypropylene powder.

The compounded, visbroken mixture of the two gas phase polymers resulted in a product with ethylene content of 15.1 mol%, MFR = 7.5 g/10 min (230 °C, 2.16 kg) and xylene solubles of 53.8 wt%. The content of isolated (i.e. fully randomised) ethylene is 10.8 mol%. Glass transition temperature T_{g} is -14.5°C. Flexural modulus according to ISO 178 is 161 MPa, notched impact strength according to ISO 179/1eA(-20 °C) is 5.0 kJ/m² and elongation at break (-20 °C) 271 %. Haze of 2 mm plates is 21.2 %. TEM photographs of the nucleated compounded polymer sample treated with RuO₄ for marking zones of different crystallinity with a magnification of 21000 show two different continuous phases structured in the nanometer-range with different crystallinity (white crystalline lamellae and a grey zone of low crystallinity) and also a low concentration of finely dispersed rubber phase (dark grey to black droplets). The two continuous zones of different crystallinity correlate with DSC melting curve showing two peaks with melting point of 141 °C and 100 °C.

### Example 3

Prepolymerisation is done in a 20 I autoclave - filled with 350 g pelletised polypropylene, 800 g liquid propylene and 24 nl H₂ - for 6 min at 30 °C without dosing ethylene.

After 15 min homopolymerisation at 65 °C a constant ethylene flow is set to 4.95 nl/min and propylene dosing in parallel to arrive and hold 2.4 MPa at 75 °C. After 60 min residence time polymerisation resulted in 1134.3 g of polymer. Catalyst activity was 25.6kg/g_{cat}·h.

The free flowing reactor product was separated from bed polymer by flotation, additivated as described above and pelletised using Altrix 3021 for visbreaking.

Characterisation resulted in 20 mol% ethylene content, MFR = 8.1 g/10 min (230 °C, 2.16 kg) (MFR of reactor product = 0.35 g/10 min]) and xylene solubles of 77.4 wt%. The content of isolated (fully randomised) ethylene is 12.4 mol%. Melting temperature is 160 °C with a broad melting range. Via torsion measurement according to ISO 6721-2A three transition temperatures are visible - a first at 45.8 °C (denoting a crystalline change), second at -28.3 °C (glass transition of random copolymer part) and third at -51.5 °C (glass transition of EPR). Flexural modulus according to ISO 178 is 48 MPa and notched impact strength according to ISO 179/1eA(-20 °C) is 102.5 kJ/m². At -20 °C tensile modulus is 327 MPa and strain at break 184 %. Haze of 2 mm plates is 57.1 %. TEM photographs of the polymer sample treated with RuO₄ for marking zones of different crystallinity with a magnification of 21000 show three different phases, two of them continuous ones, structured in the nanometer-range with different crystallinity and the third one an EPR-rubber phase as distinct particles like those known from standard heterophasic copolymers. This is quite different to heterophasic random copolymers and heterophasic copolymers which do not show two continuous phases, but only one continuous phase with a second embedded distinct phase consisting of EPR at higher ethylene contents.
The results of the above examples are summarised in the table below:

| | | **Examples** | | | | | **Comparative Examples** | |
|---|---|---|---|---|---|---|---|---|
| | | 1 | 2a | 2b | 2 | 3 | 4 | 5 |
| | | | | | | | | |
| MFR (230°C/2,16kg) | g/10min | 3.5 | 6.9 | 6.5 | 7.5 | 8.1 | 8.0 | 8.1 |
| | | | | | | | | |
| Total C2 content | mol% | 19.1 | 13 | 18 | 15.1 | 20.3 | 5.5 | 24 |
| | | | | | | | | |
| C2 (phase 1) | mol% | 5.5 | 7.3 | 6.8 | 6.6 | 2.7 | - | - |
| amount (phase 1) | wt% | 46 | 54 | 60 | 52 | 59.0 | - | - |
| C2 (phase 2) | mol% | 30.5 | 18.5 | 28.7 | 24 | 47.0 | - | - |
| amount (phase 2) | wt% | 54 | 46 | 40 | 49 | 41.0 | - | - |
| | | | | | | | | |
| Tg (DMTA) | °C | -21 | -9 | -17 | -14.5 | -28.5 | -6 | - 7,5** |
| Delta Tg (DMTA)* | °C | 65.5 | 55 | 60 | 62 | 67 | 45 | 50 ** |
| | | | | | | | | |
| Flex. Modulus MD | MPa | 73 | 273 | 69 | 161 | 48 | 960 | 460 |
| Charpy NIS +23°C | kJ/m² | n.b.*** | 66.2 | 48 | 55 | n.b.*** | 5.4 | 45 |
| Charpy NIS -20°C | kJ/m² | 88 | 1.9 | 71.9 | 5.0 | 102 | 1.2 | 4.5 |
| | | | | | | | | |
| Haze | % | 31 | 17.9 | 27.8 | 21 | 57 | 85 | 90.0 |
| | | | | | | | | |
| Tm/Hm1 (DSC) | °C/J/g | 80/29 | 104/10 | 87/8 | 100/44 | -/- | -/- | 113/1 |
| Tm / Hm 2 (DSC) | °C / J/g | 145 / 36 | 141 / 45 | 142/28 | 141 / 53 | 160/30 | 146/96 | 142/60 |

| | | | | | | | | |
|---|---|---|---|---|---|---|---|---|
| * - temperature difference between upper and lower onset of glass transition peak in tan(Delta) | | | | | | | | |
| ** - second glass transition of the elastomer phase at Tg = -50°C | | | | | | | | |
| *** - not broken | | | | | | | | |

The polymer of comparative example 4 (Borealis RD226CF) is a commercially available propylene-ethylene random copolymer produced with a 4th generation Ziegler-Natta type catalyst in a liquid phase polymerisation process without diluent, which is visbroken to the final MFR after the polymerisation process. The polymer of comparative example 5 (Softflex SD233CF from Borealis) is a commercially available propylene-ethylene heterophasic copolymer with a random copolymer matrix phase and a finely dispersed reactor-made elastomer phase produced in a sequential polymerisation process in liquid phase and gas phase, using a 4th generation Ziegler-Natta type catalyst. This grade is only additivated and pelletised after the polymerisation.

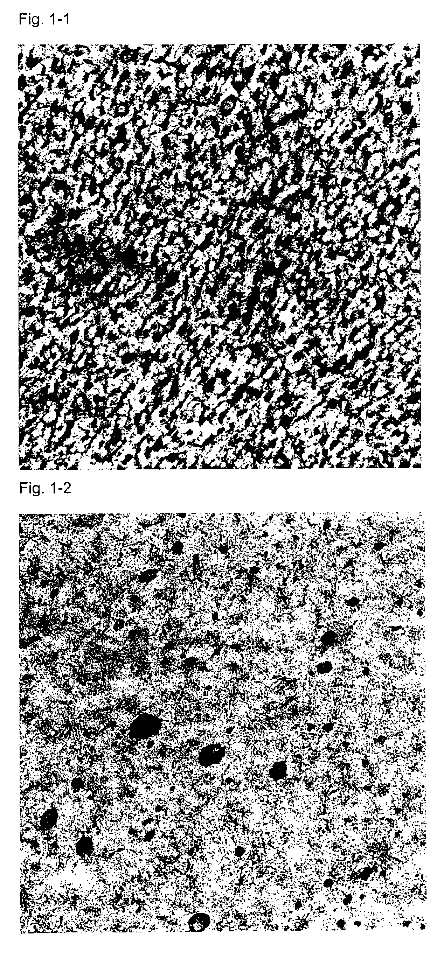

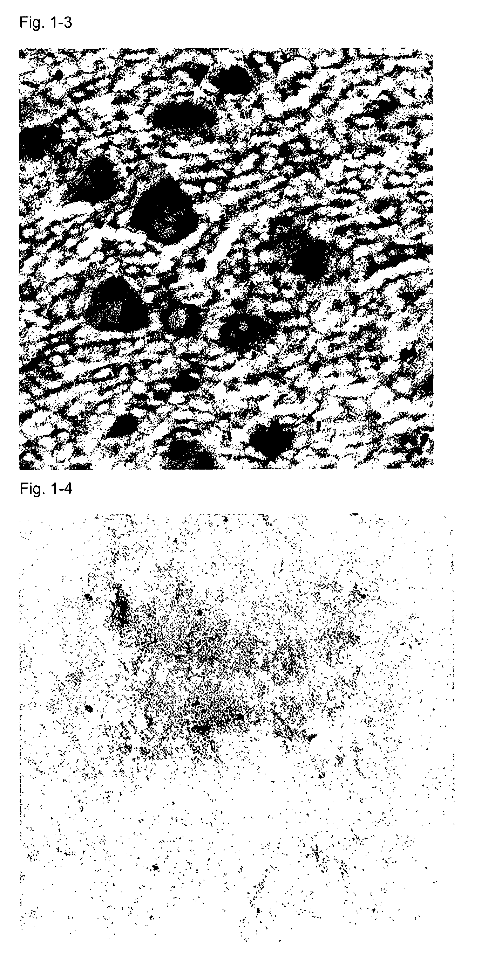

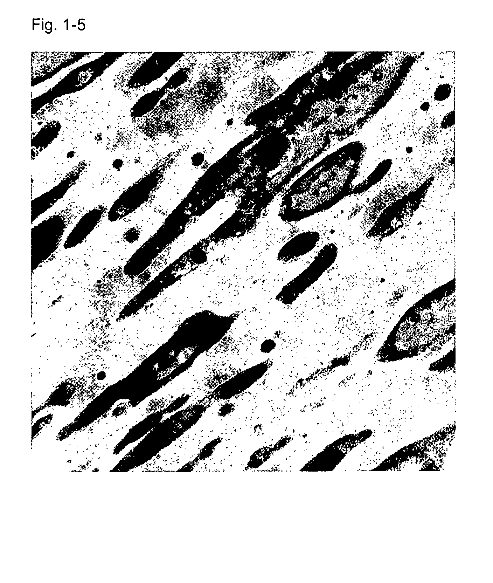

TEM micrographs of the examples and comparative examples are shown in Figures 1-1 to 1-5.

### Description of measurement methods

### XCS

Xylene solubles were determined at 23 °C according to ISO 6427. Xylene solubles are defined as the percent by weight that stays in solution after the polymer sample is dissolved in hot xylene and the solution is allowed to cool to 23 °C. XCS largely correlates to the rubber content of the heterophasic polymer.

**Comonomer contents** were measured with Fourier transform infrared spectroscopy (FTIR) calibrated with ¹³C-NMR.

**Molecular weights** and molecular weight distributions were determined with high temperature gel permeation chromatography (GPC) in trichlorobenzene at 135 °C using a mixed bed column and a refractive index detector were determined with gel permeation chromatography (GPC).

### MFR

The melt flow rates were measured with a load of 2.16 kg at 230 °C. The melt flow rate is that quantity of polymer in grams which the test apparatus standardised to ISO 1133 extrudes within 10 minutes at a temperature of 230 °C under a load of 2.16 kg.

### Tensile test

Tensile test was performed according to ISO 527-3 using injection moulded specimens as described in EN ISO 1873-2 (dogbone shape, 3 mm thickness). Tensile **modulus (E-modulus)** was also determined according to ISO 527-3 and calculated from the linear part of the tensile test results.

### Flexural test

The flexural test was carried out according to the method of ISO 178 by using injection moulded test specimens as described in EN ISO 1873-2 (80 x 10 x 4 mm).

### Charpy notched impact strength

The Charpy notched impact strength was determined according to ISO 179 / 1eA at 23 °C and at -20 °C by using injection moulded test specimens as described in EN ISO 1873-2 (80 x 10 x 4 mm).

### Dynamic Mechanical Thermal Analysis (DMTA)

The tests are carried out in accordance with ISO 6721-2 on specimens of 60x10x1 mm cut from compression moulded plaques. In a measurement at 1 Hz (free oscillation) a temperature range of at least -100 to +150 °C is covered, using a heating rate of 1 °C/min. The storage modulus G' and the tangent of the loss angle tan(δ) are the primary results of the tests; from tan(δ) the temperatures - peak position and peak broadness - of the various mobility transitions in the systems, which can be attributed to the phases present, can be determined.

### Haze

In accordance with ASTM D-1003-92 the haze (or optical turbidity) of the materials is determined on injection moulded plaques of 60x60x2 mm with white light and a limiting scattering angle of 2.5°. A higher haze value means a lower transparency of the respective sample.

### Transmission Electron Microscopy (TEM)

The micrographs are acquired in transmission on specimens contrasted with ruthenium tetroxide (RuO₄). Injection moulded specimens identical to the ones used for flexural testing are cut perpendicular to the moulding direction into two equal parts, one of which is trimmed into a pyramid shape at the cut end. At the tip, a flat surface is produced with a glass knife. Subsequently, the specimen is stained by gaseous RuO₄. The continuous Ru layer formed at the surface is removed by ultramicrotomy with a diamond knife, which is then also used to produce the cuts for the microscope with a thickness of 50-100 nm. Magnifications of 10.000 to 30.000 have been found to be suitable to judge the phase morphology in terms of the existence of a co-continuous interpenetrating network structure. The actual magnification depends upon the scale of the co-continuous interpenetrating network structure. For the examples, a Philips 300 TEM instrument was used in combination with photographic recording of the micrographs. Alternatively also a direct recording of the image with a CCD camera in a digital form can be used.
The existence of a co-continuous morphology can be determined from the resulting picture by checking the possibility to draw a continuous path within two of the existing phases from one edge of the recorded image to the opposing edge. In critical or limiting cases a contrast enhancement of the primary image may be necessary.

### Content of isolated ethylene

The content of isolated, i.e. fully randomised, ethylene is calculated with a peak deconvolution method from the FTIR spectra of the respective polymers, using the peak at 733 cm⁻¹ as characteristic for the concentration of ethylene with more than 3 CH₂ groups and the peak at 721 cm⁻¹ as characteristic for the concentration of fully randomised ethylene.

## Claims

1. A propylene polymer composition comprising a random propylene copolymer, the comonomer being ethylene and/or one or more C₄-C₁₀ α-olefins, having a total comonomer content ≥ 12 mol%, preferably ≥ 15 mol%, the random propylene copolymer comprising at least two distinct phases,
where the at least two phases are forming a co-continuous interpenetrating network structure, determined with Transmission Electron Microscopy after contrasting with RuO₄.

2. Propylene polymer composition according to claim 1, **characterised in that** the random propylene copolymer comprises
(A) 30 - 70 wt% of a first phase containing 2 - 15 mol% comonomer and
(B) 70 - 30 wt% of a second phase containing 20 - 70 mol% comonomer.

3. Propylene polymer composition according to claim 2, **characterised in that** the random propylene-α-olefin copolymer comprises
(A) 40 - 60 wt% of a first phase containing 2 - 12 mol% comonomer and
(B) 55 - 45 wt% of a second phase containing 25 - 65 mol% comonomer.

4. Propylene polymer composition according to one of claims 1 to 3, **characterised in that** the comonomer is ethylene.

5. Propylene polymer composition according to one of claims 1 to 4, **characterised in** it exhibits at least one melting point > 130 °C (DSC), the melting point being associated to a melting enthalpy of ≥ 20 J/g.

6. Propylene polymer composition according to one of claims 1 to 5, **characterised in that** the random propylene copolymer has a total amount of fully randomised comonomer of ≥ 9.0 mol%, preferably of ≥ 10.0 mol%.

7. Propylene polymer composition according to one of claims 1 to 6, **characterised in that** it comprises a blend of at least two random propylene copolymers.

8. Propylene polymer composition according to one of claims 1 to 7, **characterised in that** it comprises at least one further phase, the further phase being discontinuous.

9. Propylene polymer composition according to one of claims 1 to 8, **characterised in that** it comprises one or more clarifying and/or α-nucleating agents.

10. A process for preparing a random propylene copolymer comprising polymerisation of propylene with a comonomer, the comonomer being ethylene and/or one or more C₄-C₁₀ α-olefins, in the presence of a catalyst in a gas polymerisation process, where the amounts of propylene and comonomer being fed to the gas polymerisation process are chosen in order to adjust a comonomer-content of the random propylene copolymer of ≥ 12 mol%, preferably of ≥ 15 mol% and where the catalyst is selected from the class of Ziegler-Natta-type catalysts and where the temperature in the gas polymerisation process is ≥ 75 °C and the pressure in the gas polymerisation process is > 2.0 MPa.

11. Process according to claim 10, **characterised in that** the gas phase polymerisation is preceded by a bulk phase polymerisation.

12. Process according to claim 11, **characterised in that** the bulk phase polymerisation is operated at a temperature of < 75 °C.

13. Process according to one of claims 10 to 12, **characterised in that** the comonomer is ethylene.

14. An article comprising a propylene polymer composition according to any one of claims 1 to 9.
